# EUROPEAN PATENT SPECIFICATION

(11) **EP 3 558 837 B1**
(45) Date of publication and mention of the grant of the patent: **06.01.2021**
(21) Application number: 16834113.9
(22) Date of filing: 20.12.2016
(51) Int. Cl.: B65D 19/08, B65D 77/04, B65D 81/20, B65D 19/38

(54) **CONTAINER FOR METALLIC SCRAP, PARTICULARLY FOR SAFELY STORING AND TRANSPORTING SCRAP OF TITANIUM AND ALLOYS THEREOF**
BEHÄLTER FÜR METALLABFALL, INSBESONDERE ZUM SICHEREN LAGERN UND TRANSPORTIEREN VON ABFALL AUS TITAN UND LEGIERUNGEN DAVON
RÉCIPIENT POUR DÉCHETS MÉTALLIQUES, NOTAMMENT POUR LE STOCKAGE ET LE TRANSPORT SÉCURISÉS DES DÉCHETS EN TITANE OU DES ALLIAGES COMPRENANT DU TITANE

(43) Date of publication of application: 30.10.2019
(73) Proprietor: Special Rare Metals SA, 6965 Cadro (CH)
(72) Inventor: TOSI, Antonio, 6963 Pregassona (CH)
(74) Representative: Modiano, Gabriella Diana
(86) International application number: PCT/IB2016/057821
(87) International publication number: WO 2018/115927

(56) References cited:
- WO-A1-92/06901
- CA-A1- 2 852 784
- DE-A1- 19 822 459
- US-A- 4 093 009
- US-A- 5 638 971
- US-A- 5 806 575
- US-A1- 2003 041 736

## Description

The present invention relates to a container for metallic scrap, particularly but not exclusively useful and practical in the field of safe storage and transport of scrap of titanium (symbol Ti) and alloys thereof. This scrap comprises for example titanium chips produced by mechanical machining of the metal with machine tools.

In the present description, the term "transport" is understood to reference transport in general and therefore comprises ground transport, for example by means of heavy goods vehicles or freight trains, air transport, for example by means of transport aircraft or cargo aircraft, and maritime transport, for example by means of cargo ships or container ships.

### Background of the invention

Like other metals, the machining of titanium produces waste material (scrap), for example in the form of chips.

Since titanium is an expensive metal, its scrap is typically recovered after machining to be then reused for other new purposes after appropriate treatments.

In any case, although it is typically recovered and reused, this titanium scrap is commonly classified as waste and, within waste management in general, there are various national and international standards (for example at the European level) according to which the producer of the waste must identify its type by means of a code, for example of the numeric type. This code is associated with the waste prior to its storage and transport.

By means of standard classification systems, such as for example the European Waste Catalogue (EWC), it is then possible to identify the type of waste for any disposal or recovery starting from said code.

Currently, scrap of titanium and also of other metals is stored and transported by using bins, i.e., large metal containers, commonly used in the mechanical industry for the management of machining waste. For example, containers of the prior art are disclosed in DE 198,22,459 A1, US 5,806,575 A, US 5,638,971 A, and CA 2,852,784 A1.

However, these solutions of the known type are not free from drawbacks, which include the fact that the known containers used for storage and transport of titanium scrap offer no prevention and/or protection against the risk of fire or even explosion. This risk is due mainly to the high reactivity in air when hot that characterizes so-called reactive metals in general and titanium in particular.

Titanium in fact burns if it is heated in air, due to its high affinity for oxygen, nitrogen, hydrogen or mixtures thereof. Titanium is also the only element that burns in a pure nitrogen atmosphere.

Moreover, this risk of fire or explosion is further amplified by the fact that titanium scrap is typically in the form of chips, i.e., in a form that increases considerably the surface of the metal in contact with air.

Titanium is one of the most dangerous elements in case of combustion, since there are no known effective methods for extinguishing a fire of titanium scrap. Titanium scrap fires in fact cannot be extinguished with known firefighting products. Probably, the use of a mixture of siliceous sand and sea salt might help to extinguish a titanium scrap fire.

### Definition of the invention

The aim of the present invention is to overcome the limitations of the background art cited above, devising a container for metallic scrap, particularly for safely storing and transporting scrap of titanium and alloys thereof, which allows correct storage of scrap of a reactive metal, maximizing the level of safety in the subsequent step of transport thereof, mainly ground transport but also air transport and sea transport.

Within the scope of this aim, an object of the present invention is to conceive a container for metallic scrap, particularly for safely storing and transporting scrap of titanium and alloys thereof, which prevents the triggering of combustion, which might cause a fire or even an explosion of the reactive material stored and transported inside it.

Another object of the present invention is to conceive a container for metallic scrap, particularly for safely storing and transporting scrap of titanium and alloys thereof, that allows to minimize the exposure to air of the reactive metal, consequently reducing the contact of the reactive metal with the gases for which it has affinity, such as for example oxygen, nitrogen, hydrogen or mixtures thereof.

A further object of the present invention is to provide a container for metallic scrap, particularly for safely storing and transporting scrap of titanium and alloys thereof, that allows to facilitate the operations for storing the reactive metal and to speed up the operations for loading said container before its transport.

Another object of the present invention is to provide a container for metallic scrap, particularly for safely storing and transporting scrap of titanium and alloys thereof, that allows good maneuverability, ensuring the integrity of all of its parts and protecting them from any impacts of various kinds that might compromise its operation.

Another object of the present invention is to provide a container for metallic scrap, particularly for safely storing and transporting scrap of titanium and alloys thereof, that is highly reliable, relatively simple to provide, and at competitive costs if compared with the background art.

This aim, as well as these and other objects that will become better apparent hereinafter, are achieved by a container for metallic scrap, particularly for safely storing and transporting scrap of titanium and alloys thereof, comprising an external container body and a lid, wherein said external container body can be closed hermetically by means of said lid, defining and delimiting a vacuum chamber, and in that it comprises a vacuum pump, which is adapted to create vacuum in said vacuum chamber, characterized in that said container comprises furthermore a perforated internal container body, which comprises a plurality of holes, and is adapted to filter said scrap and to separate a cooling liquid, and in that said external container body comprises a hopper-like bottom, with the vertex of which means for discharging said cooling liquid are associated.

### Brief description of drawings

Further characteristics and advantages of the invention will become better apparent from the description of a preferred but not exclusive embodiment of the container for metallic scrap, particularly for safely storing and transporting scrap of titanium and alloys thereof, according to the invention, illustrated by way of nonlimiting example with the aid of the accompanying drawings, wherein:

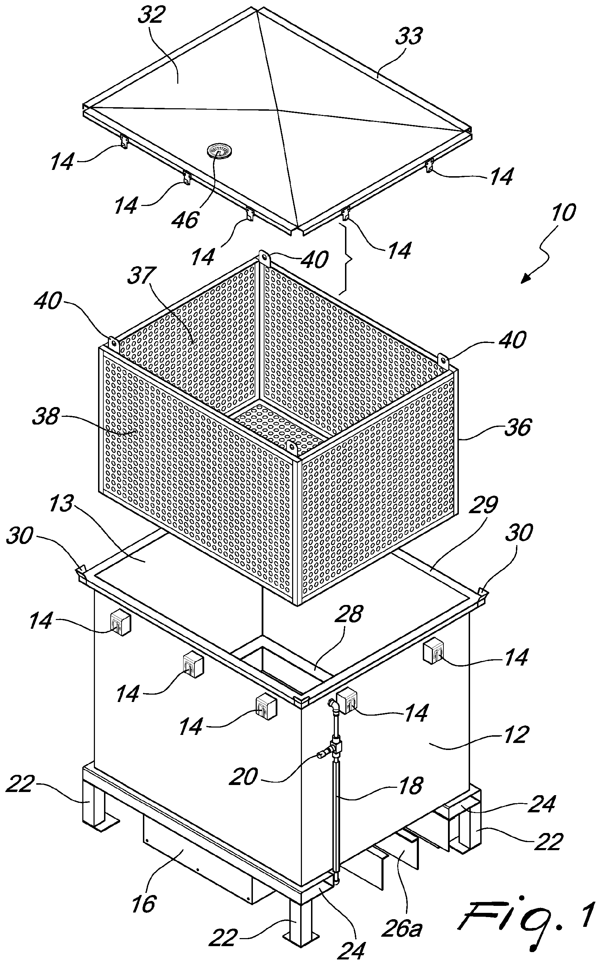

Figure 1 is an exploded perspective view of an embodiment of the container for metallic scrap, particularly for safely storing and transporting scrap of titanium and alloys thereof, according to the invention;

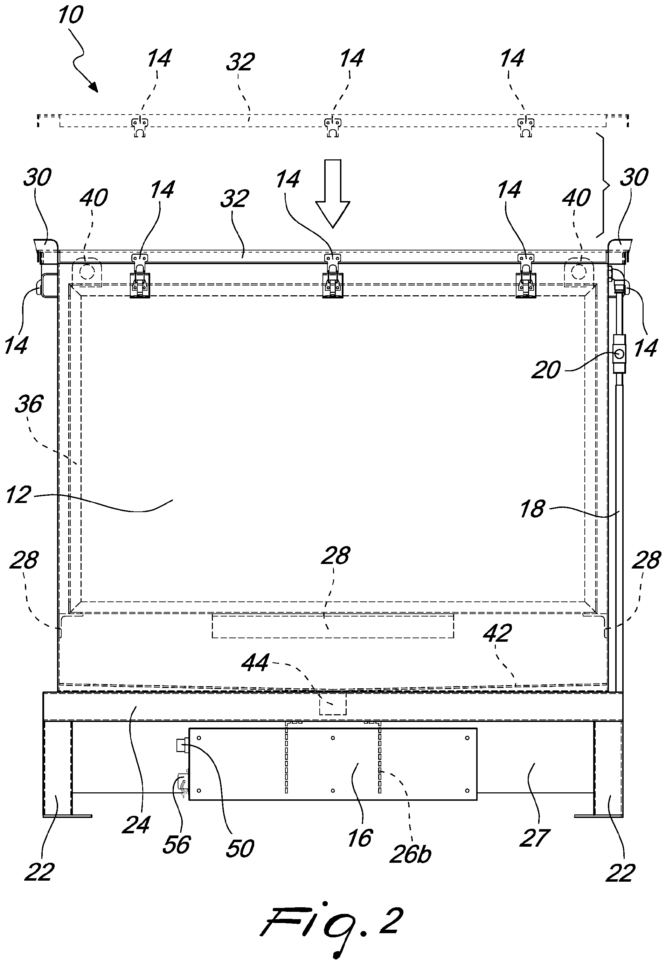

Figure 2 is a front elevation view of the embodiment of the container for metallic scrap, particularly for safely storing and transporting scrap of titanium and alloys thereof, according to the invention, shown in Figure 1;

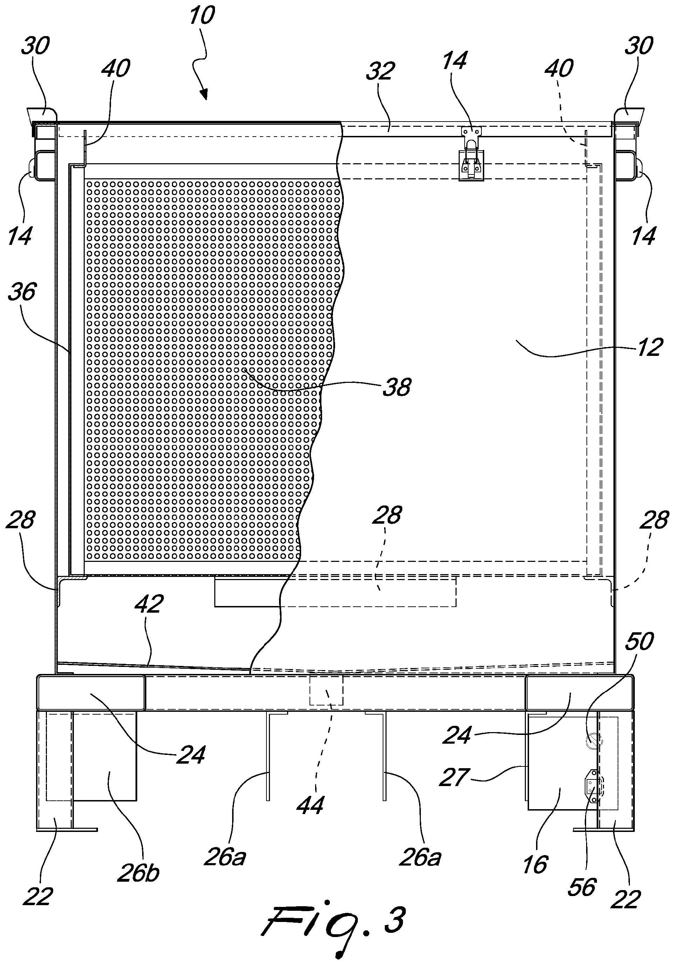

Figure 3 is a cutout lateral elevation view of the embodiment of the container for metallic scrap, particularly for safely storing and transporting scrap of titanium and alloys thereof, according to the invention, shown in Figure 1;

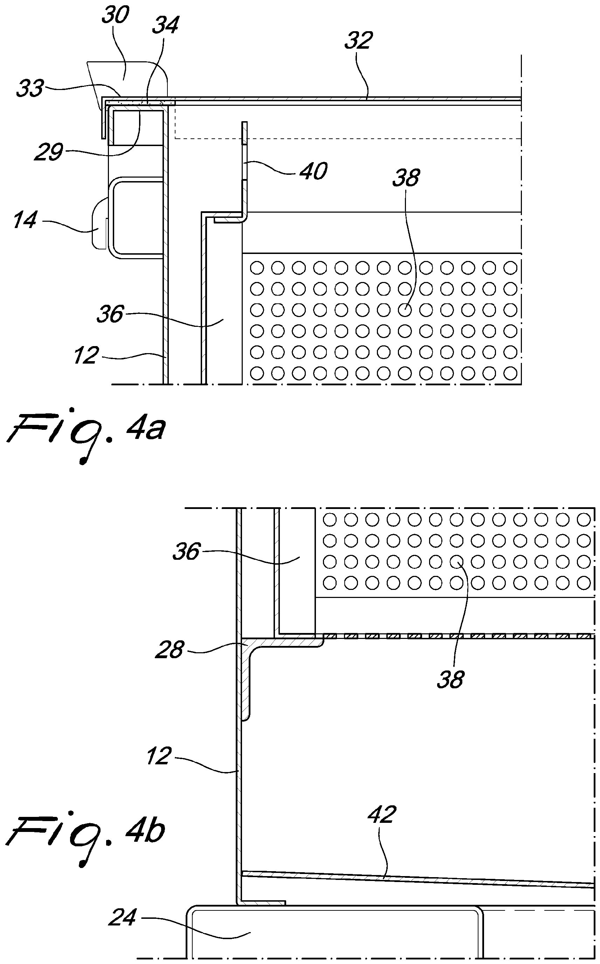

Figures 4a and 4b are a first detail view and a second detail view of the embodiment of the container for metallic scrap, particularly for safely storing and transporting scrap of titanium and alloys thereof, according to the invention, shown in Figure 3;

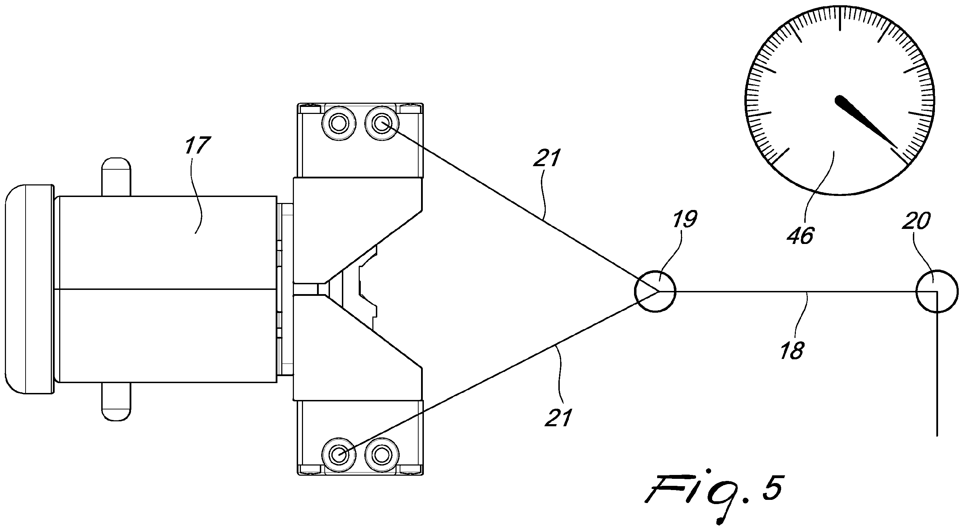

Figure 5 is a block diagram that shows the vacuum pump system of an embodiment of the container for metallic scrap, particularly for safely storing and transporting scrap of titanium and alloys thereof, according to the invention;

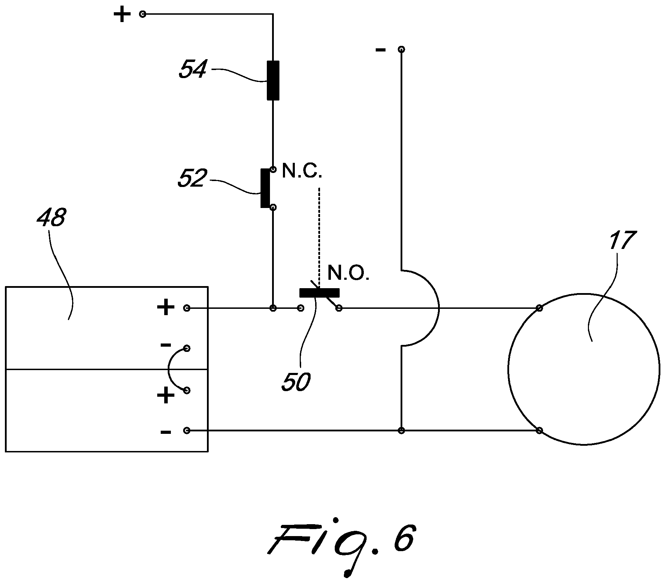

Figure 6 is a block diagram of the electrical system of an embodiment of the container for metallic scrap, particularly for safely storing and transporting scrap of titanium and alloys thereof, according to the invention.

### Description of the preferred embodiments

With reference to the cited figures, the container for metallic scrap, particularly for safely storing and transporting scrap of titanium and alloys thereof, according to the invention, generally designated by the reference numeral 10, substantially comprises an external container body 12, a vacuum pump 17, a perforated internal container body 36, and a lid 32. The external container body 12 can be closed hermetically by means of the lid 32, forming and delimiting a vacuum chamber.

The external container body, or outer shell, 12 is preferably provided by means of carbon steel plates of appropriate thickness, for example comprised between 1.5 and 2 millimeters, mutually rigidly coupled by means of welds.

The external container body 12 preferably has the shape of a right parallelepiped and for example its volume can be comprised between 0.8 and 1.2 cubic meters.

The external container body 12 comprises an opening 13 at its upper face, this opening 13 being adapted to allow access to the inside of the external container body 12 on the part of the perforated internal container body 36.

The external container body 12 comprises coupling means 14, preferably a plurality of adjustable lever-based closure devices, which are adapted to couple the lid 32 to the external container body 12, consequently blocking the opening 13 of the latter. In particular, the external container body 12 comprises a first portion of the coupling means 14. The coupling means 14 are preferably arranged proximate to the rim 29 of the external container body 12.

The external container body 12 comprises a hopper-like bottom 42, at the vertex of which there is a discharge hole. Means 44 for discharging cooling liquid, such as for example a 1.5-inch (3.81 cm) ball valve, are associated with the discharge hole of the hopper-like bottom 42 and can be accessed from the outside by an operator.

The external container body 12 comprises internally at least one supporting profile 28, preferably of the angular type, which is preferably arranged proximate to the hopper-like bottom 42. The perforated internal container body 36 rests on the at least one supporting profile 28, once the perforated internal container body 36 has been inserted within the external container body 12.

The external container body 12 comprises at least one lid guide 30, which is arranged externally along the rim 29 of the external container body 12. Preferably, the external container body 12 comprises a lid guide 30 at each corner of the rim 29 of the external container body 12. The lid 32 is blocked horizontally by the at least one lid guide 30, once the lid 32 has been arranged above the rim 29 of the external container body 12.

The vacuum pump 17, which is preferably powered electrically, is adapted to create vacuum inside the container 10, i.e., in the vacuum chamber that is defined and delimited by the external container body 12 and by the lid 32, by extracting the air comprised therein, for example at a pressure comprise between 100 and 300 mbar. The vacuum pump 17 is also adapted to restore the ambient or atmospheric pressure inside the container 10, by introducing air in the vacuum chamber.

This vacuum pump 17 is connected to a compressed air duct 18, preferably of the linear type and with 8x10 dimensions.

The compressed air duct 18 is adapted to connect the vacuum pump 17 to the inside of the container 10, i.e., to the vacuum chamber of the container 10. Advantageously, an adjustment valve 20 is comprised along the compressed air duct 18 and is adapted to adjust the air flow in output from or in input to the vacuum chamber.

In one embodiment of the container 10 for metallic scrap according to the invention, the vacuum pump 17 is of the membrane type, which comprises at least one intake connection and at least one delivery connection, with 20 W of power, and powered at 24 V DC.

In this case, the vacuum pump 17, in particular the corresponding intake and delivery connections, is connected to the compressed air duct 18 by means of a two-way connector 19: in output from the vacuum pump 17 there are two compressed air ducts 21, preferably of the linear type and with 6x8 dimensions, whereas after the two-way connector 19 there is the above mentioned compressed air duct 18.

The container 10 for metallic scrap according to the invention comprises furthermore an electrical system, which is adapted to control and supply the vacuum pump 17 with electric power. In one embodiment of the container 10 for metallic scrap according to the invention, this electrical system comprises at least one preferably rechargeable battery 48, for example a pair of rechargeable lead batteries, each at 12 V DC, a connector 56 for recharging the at least one battery 48, an N.O. (normally-open) switch 50, a normally-closed (N.C.) switch 52, and a fuse 54 which, in case of a short circuit, prevents damage to the vacuum pump 17.

Advantageously, the external container body 12 comprises in a downward region and laterally a protective casing 16, which is adapted to contain the vacuum pump 17 and the electrical system and is adapted to protect these elements against impacts of various kinds. The protective casing 16 is preferably made of carbon steel of appropriate thickness, for example equal to 5 millimeters.

The external container body 12 comprises in a downward region a plurality of supporting feet 22, preferably a supporting foot 22 at each lower corner of the external container body 12.

Advantageously, the external container body 12 comprises in a downward region at least one pair of fork guides 24, which are mutually parallel and are adapted to guide and accommodate inside them the forks of a forklift truck, and are therefore adapted to ensure the maneuverability of the container 10 during the movement step, protecting it against impacts with the forks of the forklift truck.

Advantageously, the external container body 12 comprises in a downward region a plurality of protective plates 26a and 26b, which are adapted to protect the discharge means 44 against impacts of various kinds, in particular against impacts with the forks of the forklift truck during the step of moving the container 10 for metallic scrap according to the invention.

Advantageously, the external container body 12 comprises in a downward region at least one protective plate 27, which is adapted to protect the protective casing 16 against impacts of various kinds, in particular against impacts with the forks of the forklift truck during the step of moving the container 10 for metallic scrap according to the invention.

The perforated internal container body, or internal cage, 36 is preferably provided by means of perforated carbon steel plates, which comprise on the surface a plurality of holes 38 for example having a circular shape and with a diameter comprised between 6 and 10 millimeters, these plates being mutually rigidly coupled by means of welds.

The perforated internal container body 36 preferably has the shape of a right parallelepiped and comprises an opening 37 at its upper face, this opening 37 being adapted to allow the collection of the scrap of a reactive metal, such as for example titanium chips, within the perforated internal container body 36.

The perforated internal container body 36 is adapted to contain the scrap of a reactive metal, such as for example titanium chips. By means of its plurality of holes 38, the perforated internal container body 36 is adapted to filter said scrap and to separate (solid-liquid separation) the cooling liquid comprised therein, which derives from the machining of the reactive metal. Typically, the cooling liquid comprises water.

The cooling liquid, by passing through the plurality of holes 38, falls onto the hopper-like bottom 42 of the external container body 12. The cooling liquid is then discharged via of the discharge means 44 before creating vacuum inside the container 10 by starting the vacuum pump 17.

As mentioned, the perforated internal container body 36 rests on the at least one supporting profile 28 of the external container body 12, once the perforated internal container body 36 is inserted within the external container body 12.

The perforated internal container body 36 comprises in an upward region a plurality of engagement eyes 40, preferably an engagement eye 40 at each upper corner of the perforated internal container body 36. The engagement eyes 40 are adapted to facilitate the grip of the perforated internal container body 36 during the steps of insertion in, or extraction from, the external container body 12.

The lid 32 is preferably provided by means of a carbon steel plate of appropriate thickness, for example comprised between 1.5 and 2 millimeters.

The lid 32 is arranged above the rim 29 of the external container body 12. The lid 32 comprises sealing means 34, such as for example a gasket or a continuous strip of sponge, which are arranged along the lower face of the edge 33 of the lid 32.

In particular, the sealing means 34 are extended along the contact surface between the lid 32 and the external container body 12, in particular between the lower face of the edge 33 of the lid 32 and the upper face of the rim 29 of the external container body 12, consequently ensuring maximum tightness.

The lid 32 comprises coupling means 14, preferably a plurality of closure of adjustable lever-based closure devices, which are adapted to couple the lid 32 to the external container body 12, consequently blocking the opening 13 of the latter. In particular, the lid 32 comprises a second portion of the coupling means 14. The coupling means 14 are preferably arranged along the edge 33 of the lid 32.

In one embodiment of the container 10 for metallic scrap according to the invention, the lid 32 is pivoted to the external container body 12 by virtue of coupling means 14 with variable adjustment, in order to allow adjustment of the hermetic closure of the container 10 depending on the compression of the sealing means 34.

The lid 32 is independent and has no fixed points of connection to the external container body 12 and therefore the lid 32 does not occupy space during the steps of insertion or extraction of the perforated internal container body 36 in or from the external container body 12.

The combined action of the coupling means 14 and of the sealing means 34 allows to isolate hermetically the vacuum chamber, preventing the passage of any fluid, in particular of air, and to create vacuum inside the container 10.

Advantageously, the container 10 for metallic scrap according to the invention, in particular the lid 32, comprises a vacuum gauge 46, which is adapted to measure the residual pressure of the vacuum chamber that has been created inside the container 10.

In practice it has been found that the invention achieves fully the intended aim and objects. In particular it has been shown that the container for metallic scrap, particularly for safely storing and transporting scrap of titanium and alloys thereof, thus conceived allows to overcome the qualitative limitations of the background art, since it allows correct storage of the scrap of a reactive metal, maximizing the safety level in the subsequent step of its transport, mainly land transport but also air transport and sea transport.

An advantage of the container for metallic scrap, particularly for safely storing and transporting scrap of titanium and alloys thereof, according to the present invention resides in that it prevents the triggering of combustion, which might cause a fire, or even an explosion, of the reactive metal stored and transported inside it.

Another advantage of the container for metallic scrap, particularly for safely storing and transporting scrap of titanium and alloys thereof, according to the present invention resides in that it allows to minimize the exposure to air of the reactive metal, consequently reducing the contact of the reactive metal with the gases for which it has affinity, such as for example oxygen, nitrogen, hydrogen or mixtures thereof.

A further advantage of the container for metallic scrap, particularly for safely storing and transporting scrap of titanium and alloys thereof, according to the present invention resides in that it allows to facilitate the operations for storage of the reactive metal and to speed up the operations for loading said container before its transport.

Moreover, an advantage of the container for metallic scrap, particularly for safely storing and transporting scrap of titanium and alloys thereof, according to the present invention resides in that it allows good maneuverability, ensuring the integrity of all of its parts and protecting them against any impacts of various kinds which might compromise its operation.

Although the container for metallic scrap according to the invention has been conceived in particular for safely storing and transporting scrap of titanium and alloys thereof, it can in any case be used more generally for the safe storage and transport of metals having a high reactivity when hot with oxygen, nitrogen or hydrogen present in the air, i.e., of all metals that have a risk of fire or even explosion if heated and placed in contact with the air of the surrounding environment. In addition to the already cited titanium and alloys thereof, other examples of reactive material are magnesium (symbol Mg) and alloys thereof, and zirconium (symbol Zr) and alloys thereof.

The invention thus conceived is susceptible of numerous modifications and variations, all of which are within the scope of the inventive concept defined by the claims.

In practice, the materials used, so long as they are compatible with the specific use, as well as the contingent shapes and dimensions, may be any according to the requirements and the state of the art.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A container (10) for metallic scrap, particularly for safely storing and transporting scrap of titanium and alloys thereof, comprising an external container body (12) and a lid (32), wherein said external container body (12) can be closed hermetically by means of said lid (32), defining and delimiting a vacuum chamber, and wherein it comprises a vacuum pump (17), which is adapted to create vacuum in said vacuum chamber **characterized in that** said container (10) comprises furthermore a perforated internal container body (36), which comprises a plurality of holes (38), and is adapted to filter said scrap and to separate a cooling liquid, and **in that** said external container body (12) comprises a hopper-like bottom (42), with the vertex of which means (44) for discharging said cooling liquid are associated.

2. The container (10) for metallic scrap according to claim 1, **characterized in that** said lid (32) comprises sealing means (34) arranged along a lower face of an edge (33) of said lid (32).

3. The container (10) for metallic scrap according to any one of the preceding claims, **characterized in that** said external container body (12) and said lid (32) comprise coupling means (14), which are adapted to couple said lid (32) to said external container body (12).

4. The container (10) for metallic scrap according to any one of the preceding claims, **characterized in that** said vacuum pump (17) is connected to a compressed air duct (18), said compressed air duct (18) being adapted to connect said vacuum pump (17) to said vacuum chamber.

5. The container (10) for metallic scrap according to claim 4, **characterized in that** said compressed air duct (18) comprises an adjustment valve (20), which is adapted to adjust the air flow in output from or in input to said vacuum chamber.

6. The container (10) for metallic scrap according to any one of the preceding claims, **characterized in that** said external container body (12) comprises a protective casing (16), which is adapted to contain said vacuum pump (17) and a corresponding electrical system, and is adapted to protect said vacuum pump (17) and said electrical system against impacts of various kinds.

7. The container (10) for metallic scrap according to any one of the preceding claims, **characterized in that** said external container body (12) comprises at least one pair of fork guides (24), which are mutually parallel and are adapted to guide and accommodate inside them the forks of a forklift truck.

8. The container (10) for metallic scrap according to any one of the preceding claims, **characterized in that** said external container body (12) comprises a plurality of protective plates (26a, 26b), which are adapted to protect said discharge means (44) against impacts of various kinds.

9. The container (10) for metallic scrap according to any one of the claims 6 to 8, **characterized in that** said external container body (12) comprises at least one protective plate (27), which is adapted to protect said protective casing (16) against impacts of various kinds.

10. The container (10) for metallic scrap according to any one of the preceding claims, **characterized in that** said external container body (12) comprises a plurality of supporting feet (22).

11. The container (10) for metallic scrap according to any one of the preceding claims, **characterized in that** said external container body (12) comprises at least one supporting profile (28), on which said perforated internal container body (36) rests.

12. The container (10) for metallic scrap according to any one of the preceding claims, **characterized in that** said external container body (12) comprises at least one lid guide (30), which is arranged externally along a rim (29) of said external container body (12) and is adapted to block said lid (32) horizontally.

13. The container (10) for metallic scrap according to any one of the preceding claims, **characterized in that** said perforated internal container body (36) comprises in an upper region a plurality of engagement eyes (40), which are adapted to facilitate the grip of said perforated internal container body (36).

14. The container (10) for metallic scrap according to any one of the preceding claims, **characterized in that** it comprises a vacuum gauge (46), which is adapted to measure the residual pressure of said vacuum chamber that has formed inside said container (10).

## Patentansprüche

1. Ein Behälter (10) für Metallabfall insbesondere zum sicheren Lagern und Transportieren von Abfall aus Titan und Legierungen davon, der einen äußeren Behälterkörper (12) und einen Deckel (32) umfasst, wobei der äußere Behälterkörper (12) hermetisch mit dem Deckel (32) verschlossen werden kann, eine Vakuumkammer bestimmend und begrenzend, und wobei
er eine Vakuumpumpe (17) umfasst, die ausgebildet ist, um Vakuum in der Vakuumkammer zu erzeugen,
**dadurch gekennzeichnet, dass** der Behälter (10) weiter einen perforierten inneren Behälterkörper (36) umfasst, der eine Vielzahl von Löchern (38) umfasst und ausgebildet ist, um den Abfall zu filtern und eine Kühlflüssigkeit abzutrennen und dadurch dass der äußere Behälterkörper (12) einen trichterartigen Boden (42) umfasst, mit dessen Scheitelpunkt Mittel (44) zum Ablassen der Kühlflüssigkeit verbunden sind.

2. Der Behälter (10) für Metallabfall gemäß Anspruch 1, **dadurch gekennzeichnet, dass** der Deckel (32) Abdichtungsmittel (34) umfasst, die entlang einer Unterseite einer Kante (33) des Deckels (32) angeordnet sind.

3. Der Behälter (10) für Metallabfall gemäß einem beliebigen der obigen Ansprüche, **dadurch gekennzeichnet, dass** der äußere Behälterkörper (12) und der Deckel (32) Kopplungsmittel (14) umfassen, die ausgebildet sind, um den Deckel (32) mit dem äußeren Behälterkörper (12) zu koppeln.

4. Der Behälter (10) für Metallabfall gemäß einem beliebigen der obigen Ansprüche, **dadurch gekennzeichnet, dass** die Vakuumpumpe (17) mit einer Druckluftleitung (18) verbunden ist, wobei die Druckluftleitung (18) ausgebildet ist, um die Vakuumpumpe (17) mit der Vakuumkammer zu verbinden.

5. Der Behälter (10) für Metallabfall gemäß Anspruch 4, **dadurch gekennzeichnet, dass** die Druckluftleitung (18) ein Stellventil (20) umfasst, das ausgebildet ist, um den Luftstrom der aus der Vakuumkammer aus- oder in sie eintritt, anzupassen.

6. Der Behälter (10) für Metallabfall gemäß einem beliebigen der obigen Ansprüche, **dadurch gekennzeichnet, dass** der äußere Behälterkörper (12) ein Schutzgehäuse (16) umfasst, der ausgebildet ist, um die Vakuumpumpe (17) und ein dazu gehöriges elektrisches System aufzunehmen und die Vakuumpumpe (17) und das elektrische System vor Stößen verschiedener Art zu schützen.

7. Der Behälter (10) für Metallabfall gemäß einem beliebigen der obigen Ansprüche, **dadurch gekennzeichnet, dass** der äußere Behälterkörper (12) mindestens ein Paar von Gabelführungen (24) umfasst, die zueinander parallel und ausgebildet sind, um die Gabeln eines Gabelstaplers zu führen und in sich aufzunehmen.

8. Der Behälter (10) für Metallabfall gemäß einem beliebigen der obigen Ansprüche, **dadurch gekennzeichnet, dass** der äußere Behälterkörper (12) eine Vielzahl von Schutzplatten (26a, 26b) umfasst, die ausgebildet sind, um die Ablassmittel (44) vor Stößen von verschiedener Art zu schützen.

9. Der Behälter (10) für Metallabfall gemäß einem beliebigen der Anspruch 6 bis 8, **dadurch gekennzeichnet, dass** der äußere Behälterkörper (12) mindestens eine Schutzplatte (27) umfasst, die ausgebildet ist, um das Schutzgehäuse (16) vor Stößen verschiedener Art zu schützen.

10. Der Behälter (10) für Metallabfall gemäß einem beliebigen der obigen Ansprüche, **dadurch gekennzeichnet, dass** der äußere Behälterkörper (12) eine Vielzahl von Stützfüßen (22) umfasst.

11. Der Behälter (10) für Metallabfall gemäß einem beliebigen der obigen Ansprüche, **dadurch gekennzeichnet, dass** der äußere Behälterkörper (12) mindestens ein tragendes Profil (28) umfasst auf dem der perforierte innere Behälterkörper (36) ruht.

12. Der Behälter (10) für Metallabfall gemäß einem beliebigen der obigen Ansprüche, **dadurch gekennzeichnet, dass** der äußere Behälterkörper (12) mindestens eine Deckelführung (30) umfasst, die außen entlang einem Rand (29) des äußeren Behälterkörpers (12) angeordnet und ausgebildet ist, um den Deckel (32) horizontal zu blockieren.

13. Der Behälter (10) für Metallabfall gemäß einem beliebigen der obigen Ansprüche, **dadurch gekennzeichnet, dass** der perforierte innere Behälterkörper (36) in einem oberen Bereich eine Vielzahl von Eingriffsösen (40) umfasst, die ausgebildet sind, um das Greifen des perforierten inneren Behälterkörpers (36) zu erleichtern.

14. Der Behälter (10) für Metallabfall gemäß einem beliebigen der obigen Ansprüche, **dadurch gekennzeichnet, dass** er ein Vakuummeter (46) umfasst, das ausgebildet ist, um den Restdruck der Vakuumkammer zu messen, die sich in dem Behälter (10) gebildet hat.

## Revendications

1. Récipient (10) pour déchets métalliques, notamment pour le stockage et le transport sécurisés des déchets de titane et des alliages comportant du titane, comprenant un corps de récipient extérieur (12) et un couvercle (32), sachant que ledit corps de récipient extérieur (12) peut être fermé de manière hermétique au moyen du couvercle (32), en définissant et en délimitant une chambre à vide, et sachant qu'il comprend une pompe à vide (17) qui est adaptée pour créer le vide dans ladite chambre à vide,
**caractérisé en ce que** ledit récipient (10) comprend en outre un corps de récipient intérieur (36) perforé qui comporte une pluralité de trous (38) et est adapté pour filtrer lesdits déchets et pour séparer un liquide de refroidissement, et **en ce que** ledit corps de récipient extérieur (12) comprend un fond (42) en forme de trémie, au sommet duquel sont associés des moyens (44) destinés à évacuer ledit liquide de refroidissement.

2. Récipient (10) pour déchets métalliques selon la revendication 1, **caractérisé en ce que** ledit couvercle (32) comprend un moyen d'étanchéité (34) disposé le long de la face inférieure d'un bord (33) dudit couvercle (32).

3. Récipient (10) pour déchets métalliques selon l'une quelconque des revendications précédentes, **caractérisé en ce que** ledit corps de récipient extérieur (12) et ledit couvercle (32) comprennent des moyens de fixation (14) qui sont adaptés pour fixer ledit couvercle (32) audit corps de récipient extérieur (12).

4. Récipient (10) pour déchets métalliques selon l'une quelconque des revendications précédentes, **caractérisé en ce que** ladite pompe à vide (17) est raccordée à une conduite d'air comprimé (18), ladite conduite d'air comprimé (18) étant adaptée pour relier ladite pompe à vide (17) à ladite chambre à vide.

5. Récipient (10) pour déchets métalliques selon la revendication 4, **caractérisé en ce que** ladite conduite d'air comprimé (18) comprend une vanne de réglage (20) qui est adaptée pour régler le flux d'air qui sort de ladite chambre à vide ou qui y entre.

6. Récipient (10) pour déchets métalliques selon l'une quelconque des revendications précédentes, **caractérisé en ce que** ledit corps de récipient extérieur (12) comprend un boîtier de protection (16) qui est adapté pour contenir ladite pompe à vide (17) et un système électrique correspondant, et est adapté pour protéger ladite pompe à vide (17) et ledit système électrique contre divers types d'influences.

7. Récipient (10) pour déchets métalliques selon l'une quelconque des revendications précédentes, **caractérisé en ce que** ledit corps de récipient extérieur (12) comprend au moins une paire de guides de fourche (24) qui sont mutuellement parallèles et adaptés pour guider et recevoir entre eux les fourches d'un chariot élévateur.

8. Récipient (10) pour déchets métalliques selon l'une quelconque des revendications précédentes, **caractérisé en ce que** ledit corps de récipient extérieur (12) comprend une pluralité de plaques de protection (26a, 26b) qui sont adaptées pour protéger ledit moyen d'évacuation (44) contre divers types d'influences.

9. Récipient (10) pour déchets métalliques selon l'une quelconque des revendications 6 à 8, **caractérisé en ce que** ledit corps de récipient extérieur (12) comprend au moins une plaque de protection (27) qui est adaptée pour protéger ledit boîtier de protection (16) contre divers types d'influences.

10. Récipient (10) pour déchets métalliques selon l'une quelconque des revendications précédentes, **caractérisé en ce que** ledit corps de récipient extérieur (12) comprend une pluralité de pieds de support (22).

11. Récipient (10) pour déchets métalliques selon l'une quelconque des revendications précédentes, **caractérisé en ce que** ledit corps de récipient extérieur (12) comprend au moins un profilé de support (28) sur lequel repose ledit corps de récipient intérieur (36).

12. Récipient (10) pour déchets métalliques selon l'une quelconque des revendications précédentes, **caractérisé en ce que** ledit corps de récipient extérieur (12) comprend au moins un guide de couvercle (30) qui est disposé à l'extérieur, le long d'un bord (29) dudit corps de récipient extérieur (12), et est adapté pour bloquer horizontalement ledit couvercle (32).

13. Récipient (10) pour déchets métalliques selon l'une quelconque des revendications précédentes, **caractérisé en ce que** ledit corps de récipient intérieur (36) perforé comprend, dans une partie supérieure, une pluralité d'œillets de préhension (40) qui sont adaptés pour faciliter la prise en main dudit corps de récipient intérieur (36) perforé.

14. Récipient (10) pour déchets métalliques selon l'une quelconque des revendications précédentes, **caractérisé en ce qu'**il comprend un indicateur de vide (46) qui est adapté pour mesurer la pression résiduelle de ladite chambre à vide qui s'est formée à l'intérieur dudit récipient (10).
